# EUROPEAN PATENT SPECIFICATION

(11) **EP 3 420 808 B1**
(45) Date of publication and mention of the grant of the patent: **03.06.2020**
(21) Application number: 17178417.6
(22) Date of filing: 28.06.2017
(51) Int. Cl.: A01G 3/053

(54) **A RECIPROCATING TOOL AND A METHOD TO CONTROL THEREOF**
HUBKOLBENWERKZEUG UND VERFAHREN ZUR STEUERUNG DAVON
OUTIL ANIMÉ D'UN MOUVEMENT ALTERNATIF ET SON PROCÉDÉ DE COMMANDE

(43) Date of publication of application: 02.01.2019
(73) Proprietor: Techtronic Outdoor Products Technology Limited, Hamilton HM12 (BM)
(72) Inventor: Lam, Chin Hung, Kwai Chung, Hong Kong (CN)
(74) Representative: Stevenson-Hill, Jack Patrick

(56) References cited:
- EP-B1- 2 027 767
- EP-B1- 2 027 768
- JP-A- 2005 269 972
- US-A1- 2009 188 361
- US-A1- 2012 017 558

## Description

### TECHNICAL FIELD

The present invention relates to a reciprocating tool and a method to control a reciprocating tool.

### BACKGROUND

Reciprocating tools such as hedge trimmers and saws typically include a pair of reciprocating arms that are driven to move about each other to perform a specific function. However, during operation, the reciprocating arms may jam, resulting in the tool being stuck in the jam position.

These jams can sometimes be difficult to clear as the jam may result in the reciprocating arms being locked together in the jam. In turn, to clear the jam, the user may have to clear the jam with separate tools or by further user manipulation of the reciprocating arms. This is disadvantageous as the jam could cause significant delays in the operation of the tool, whilst increasing the risk of injury when the user manipulates the reciprocating arms to clear the jam. EP 2027768 B1 and US 2009/188361 A1 disclose reciprocating tools according to the preamble of the device claim.

### SUMMARY OF THE INVENTION

In accordance with a first aspect of the present invention, there is provided a reciprocating tool comprising:
a reciprocating arrangement driven by an electric motor controlled by a controller arranged to receive user input;
wherein, the controller includes a jam sensing device arranged to detect a jam in the reciprocating arrangement when the reciprocating arrangement is driven in a first direction, and when upon a jam is detected, arranged to activate a first un-jamming procedure and when upon a change in the user input is detected, arranged to activate a second un-jamming procedure arranged to drive the reciprocating arrangement in a second direction.

In an embodiment of the first aspect, the first direction is an operating direction of the reciprocating arrangement.

In an embodiment of the first aspect, the second direction is opposite to the first direction.

In an embodiment of the first aspect, the controller is arranged to receive the user input via an actuator arranged to be manipulated by a user to instruct the controller to drive the reciprocating arrangement in the first direction.

In an embodiment of the first aspect, the change in the user input is detected by the controller when the user further manipulates the actuator when the controller is driving the reciprocating arrangement in the first direction.

In an embodiment of the first aspect, the further manipulation of the actuator includes releasing the actuator by the user.

In an embodiment of the first aspect, the jam is detected by detecting a current draw above a predetermined threshold from the electric motor.

In an embodiment of the first aspect the jam sensing device includes a hall effect sensor and/or an optical sensor to determine the position, speed, direction of movement, or any combination thereof of one or more operating component of the reciprocating tool to detect the jam.

In an embodiment of the first aspect, the first un-jamming procedure includes terminating the drive to the reciprocating arrangement.

In an embodiment of the first aspect, the second un-jamming procedure includes reversing the reciprocating arrangement.

In an embodiment of the first aspect, the reversing of the reciprocating arrangement is performed for a brief period so as to remove the reciprocating arrangement from the jam.

In an embodiment of the first aspect, the reversing of the reciprocating arrangement is performed for three seconds or less.

In an embodiment of the first aspect, the reciprocating arrangement is a pair of reciprocating blades.

In accordance with a second aspect of the present invention, there is provided a method of controlling a reciprocating tool according to the first aspect, comprising the steps of:
- detecting a jam in the reciprocating arrangement when the reciprocating arrangement is driven in a first direction; and when upon a jam is detected,
- activating a first un-jamming procedure, and when upon a change in a user input is detected;
- activate a second un-jamming procedure arranged to drive the reciprocating arrangement in a second direction opposite to the first direction.

In an embodiment of the second aspect, the first un-jamming procedure is arranged to terminate the drive of the reciprocating arrangement in the first direction.

In an embodiment of the second aspect, the change in the user input is a release of an actuator arranged to be actuated by the user to operate the reciprocating tool.

### BRIEF DESCRIPTION OF THE DRAWINGS

Embodiments of the present invention will now be described, by way of example, with reference to the accompanying drawings in which:
Figure 1 is a perspective view with one embodiment of a hedge trimmer in accordance with one aspect of the present invention;
Figure 2 is a top view of the reciprocating blades of the hedge trimmer shown in Figure 1;
Figure 3 is block diagram illustrating the control components of the hedge trimmer of Figure 1; and,
Figure 4 is a flow diagram illustrating a method of controlling the hedge trimmer of Figure 1.

### DETAILED DESCRIPTION OF THE PREFERRED EMBODIMENT

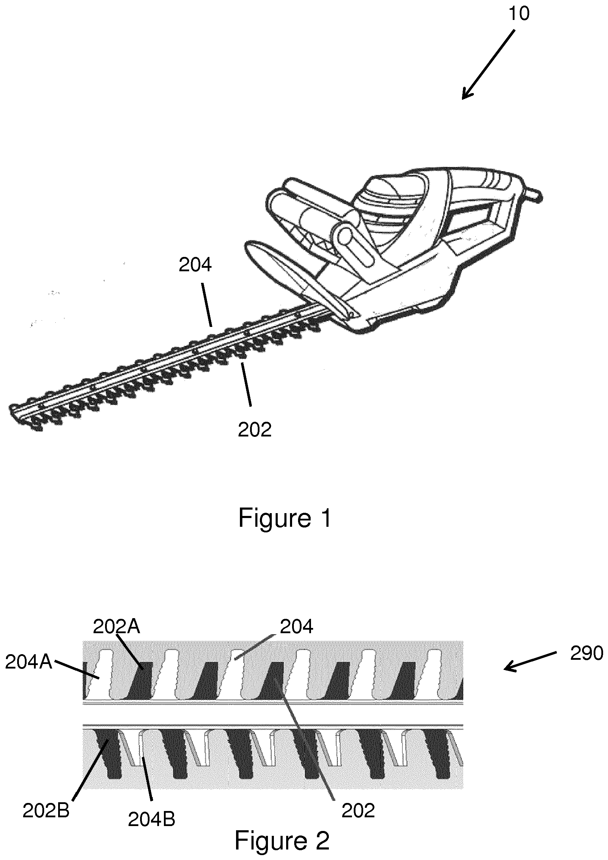

With reference to Figure 1, there is illustrated an example of a reciprocating tool, which in this example is a hedge trimmer 10. A hedge trimmer 10 is a tool which is used by gardeners and other operators to trim vegetations so as to keep the vegetation in a maintained state. Typically, the hedge trimmers are designed to cut light vegetation, including small branches, twigs, grass, leaves or small sticks and thus allow a user to quickly trim a bush hedge to the desired length or shape.

As it can be seen in Figure 1 and Figure 2, the hedge trimmer has a reciprocating arrangement 290 in the form of a pair of cutting blades 202, 204 which is shown in more detail in Figure 2. The blades 202, 204 are driven in a reciprocating manner and oscillate in a reciprocating motion between two end points. This reciprocating motion would see that the blades 202, 204 are moved about each other in the same plane with one of the blades 204 moving in opposite direction to the other blade 202. This can be achieved by moving one blade 202 forward, whilst the second blade 204 is moved in the opposite direction (backwards) in the same plane, and then moving the blades back to their original position once both blades reach the end of their range of movement. Alternatively, one of the blades may be stationary, whilst the other blade moves forward and backwards about the stationary blade.

As shown in Figure 2, as the reciprocating tool in this example is a hedge trimmer, the blades shown herein are hedge trimmer blades which are shaped with a plurality of individual teeth 202A, 202B, 204A, 204B. The teeth are spaced out such that there is a small distance so as to provide a gap between each of the tooth. This gap allows for objects which are to be cut, such as light vegetation (e.g. small branches, grass, leaves, sticks or the like) to be caught in between the teeth within these gaps. The teeth 202A, 202B, 204A, 204B has at least one sharp edge usually disposed on the leading edge of each tooth and thus when the blade is moved forward, the small branches, grass, leaves, sticks or the like caught in the gap would be cut, allowing the hedge trimmer to be used to trim hedges, grass or branches. In some examples, both edges of the teeth can be sharpened so as to allow a cut action to take place when the blades are moving in the opposite direction. In some other examples, one of the edges may be "hooked shaped" so as to catch more vegetation within the gap for cutting.

Returning to Figure 1, in this example, the blades 202, 204 are driven by a motor or engine, although preferably, as shown in this embodiment, the blades are driven with an electric motor. The electric motor (not shown), may be powered by an electrical source as such as a battery or by mains electricity transmitted to the trimmer with an electric cable. The electric motor may also be connected to a transmission mechanism, such as a gearbox, that transmits the rotational drive from the motor to a reciprocating drive onto the blades 202, 204 when electrical power is delivered to the electric motor. Typically, this occurs when a user actuates a switch or actuator, such as a trigger, to operate the hedge trimmer.

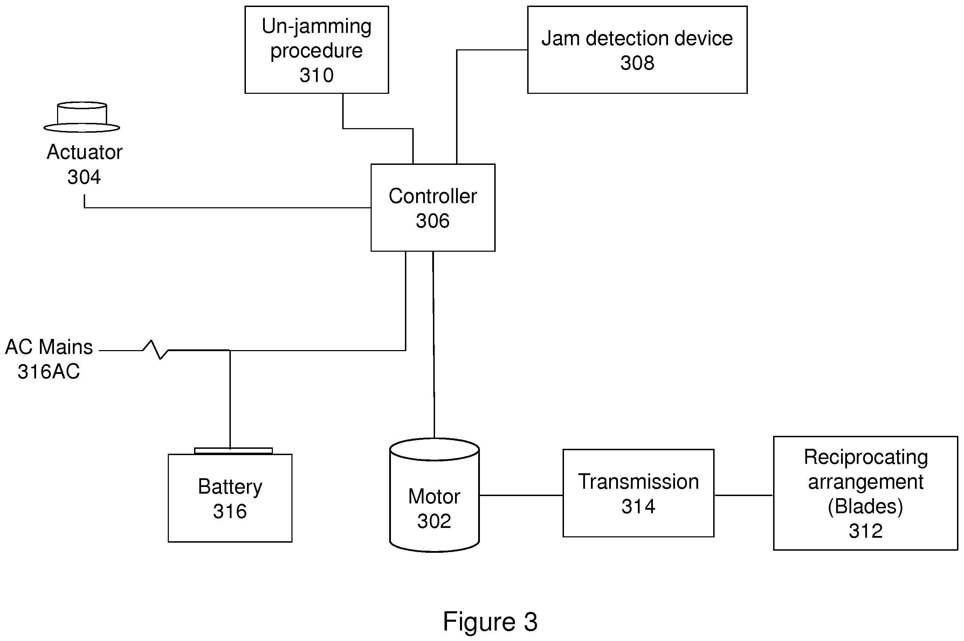

With reference to Figure 3, there is illustrated a block diagram which shows the manner in which the hedge trimmer 10 can be controlled. As shown in Figure 3, the electric motor 302 is controlled by an actuator 304 which is actuated by a user when the hedge trimmer 10 is required to be in operation. Preferably, as shown in this example embodiment, the electric motor 302 may be controlled by a digital controller 306, which may be an electric apparatus having an electronic circuit controlled by a microprocessor or computing circuit so as to direct or terminate electrical power to the motor 302. This is achieved, in one example embodiment, by using an electronic actuator 304 that detects for user input (depression of the actuator) and feeding this input into the microprocessor of the controller so as to initiate current flow from the battery 316 or electrical source 316AC to the motor. The use of electronic controllers 306 is preferable as greater control can be provided to a user via the actuator 304 whilst fail safe mechanisms can be programmed into the controller to improve operation efficiency and safety.

In this embodiment, the controller 306 may be programmed appropriately by software, hardware or a combination of both, to perform an example embodiment of a method of controlling the reciprocating tool 10 comprising the steps of :
- detecting a jam in the reciprocating arrangement 312 when the reciprocating arrangement is driven in a first direction; and when upon a jam is detected,
- activating a first un-jamming procedure 310, and when upon a change in a user input is detected;
- activating a second un-jamming procedure 310 arranged to drive the reciprocating arrangement 312 in a second direction opposite to the first direction.

In turn, the hedge trimmer 10 may operate as an example embodiment of a reciprocating tool comprising: a reciprocating arrangement 312 driven by an electric motor 302 controlled by a controller 306 arranged to receive user input; wherein, the controller 306 includes a jam sensing device 308 arranged to detect a jam in the reciprocating arrangement 312 when the reciprocating arrangement 312 is driven in a first direction, and when upon a jam is detected, activate a first un-jamming procedure 310 and when upon a change in the user input is detected, activate a second un-jamming procedure 310 arranged to drive the reciprocating arrangement 312 in a second direction.

In this embodiment, the hedge trimmer's controller will include a jam detection device or jam sensing device 308 arranged to detect a jam of the blades 312 when the hedge trimmer 10 is in operation. As an example, when the hedge trimmer 10 is in use, a stronger than expected branch or twig may be caught within the blades 312. However, the blades 312 may not be able to cut through this stronger than expected branch or twig. Depending on the position of the blades 312, and the drive position of the motor 302, the hedge trimmer 10 may jam as the motor 302 is trying to drive the blades 312 to a forward position until it reaches its end of range of motion, whilst the unexpected branch or twig may prevent the blades from travelling forward. The result is that the hedge trimmer 10 becomes jam in this jammed position as the motor 302 will not reverse from the jam without intervention by the user.

Accordingly, in this example, the jam detection device 308 is arranged to detect that the hedge trimmer 10 has jammed, and when upon a jam is detected, the controller 306 is arranged to respond appropriately to unjam the hedge trimmer 10. In this embodiment, the jam detection device 308 may be implemented by using a sensor to detect the position of the blades 312 or driving gear within the transmission mechanism 314. In these examples, a position sensor, such as a hall effect sensor or light based optical sensor (e.r. Infared Sensor), can be used to determine the position of the blade relative to the range of motion as allowed by the reciprocating arrangement 312 of the hedge trimmer 10, or the speed, position and direction of one or more operating components of the hedge trimmer. In turn, the sensor can detect the position or speed of the blade, the direction of movement and whether the blade is moving at all.

When this information is processed by the microprocessor of the controller 306, it is compared against whether the motor 302 is being actuated by the user, or the amount of current being drawn by the motor 302. From these comparisons, it can be determined whether the blades 312 of the trimmer 10 are currently jammed or are in normal motion. Thus for example, if the position sensor detects that the blades 312 are not moving (e.g. the blade's position does not change), but the user has actuated the actuator 304 and the motor 302 is currently drawing electrical current, then the trimmer 10 may be jammed.

In one example, where the Hall Effect sensor is used to detect the jam, the hall sensor can be placed adjacent to, or in a suitable location to detect the speed of the operating components of the tool (e.g. blade, motor, gear or shaft) for jam detection. In these examples, if the speed that is measured by the hall sensor is determined to be less than a predetermined value, then the controller 306 can then determine if the tool is experiencing a jam.

In a preferred embodiment, the jam detection device 308 is arranged to measure the electric current drawn by the electric motor 302 to determine if a jam condition occurs. During a jam, the motion of the blades 312 may not move or may move a very small amount. However, the electric current drawn by the motor 302 may be much higher than normal as the electric motor 302 is drawing on as much current as possible to overcome the jam. Accordingly, by monitoring the power drawn by the motor 302 over a period of time may be an indicator that the blades are jammed.

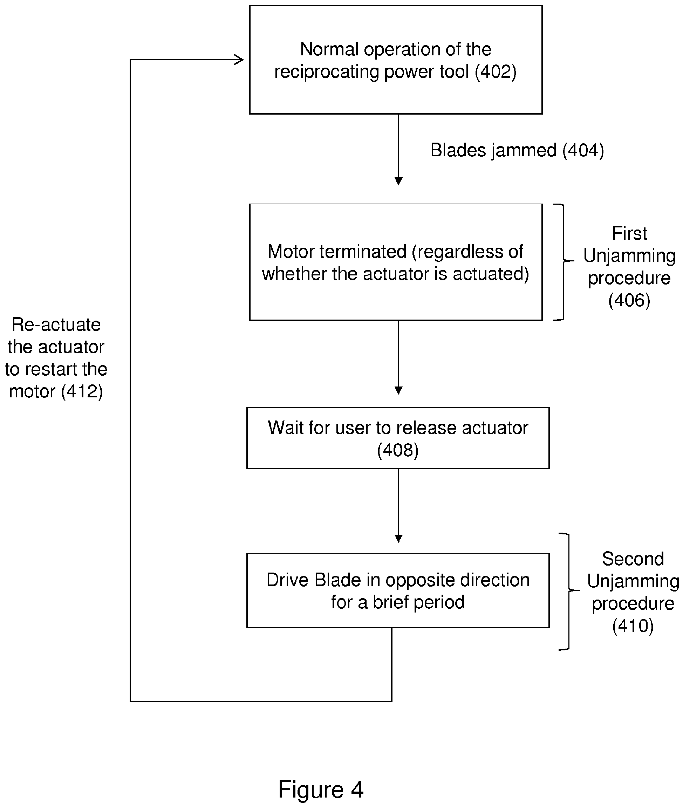

In one example, to implement this logic into the controller 306, a level of power (electrical current) drawn by the motor 302 over a period of time may be predetermined based on the operating characteristics of the motor 302 and the tool itself. Once these predetermined operating characteristics are known, a threshold of current drawn over a period of time characteristics of a jam, may be programmed into the controller's 306 microprocessor for detecting the jam. Thus in this example, if the normal operation of the motor 302 draws 2 amps, under heavy loads 2.5 amps, and in a jam position 3 amps for a continuous 1.5 seconds, the microprocessor may determine that the current drawn and its duration is representative of a jam. In turn, triggering the un-jamming procedures 310 that will be described below with reference to Figure 4.

This method of jam detection is advantageous in that no additional position sensors are necessary. This may reduce manufacturing and design costs whilst also increasing reliability due to a reduction in complexity.

In this example embodiment as shown in Figure 4, a reciprocating power tool, such as a hedge trimmer 10, may be used by a user for normal operation (402). When upon the hedge trimmer experiences a jam (404), the jam is detected by the jam detection device. Following this is that the microprocessor is arranged to activate an un-jamming routine in response to the jam. This un-jamming routine includes two un-jamming procedures, with a first procedure (406) being arranged to stop the operation of the hedge trimmer, and a second procedure (410), whereby when an user event occurs after the first procedure is completed, proceeds to apply a reverse drive to the blades so as to move it away from the jam.

In one example, the first un-jamming procedure (406) can be completed by stopping the delivery of power to the electric motor 302 when upon a jam is detected. This can be performed by the controller 306 such that when the jam sensing device detects a jam, the controller 306 is arranged to cut electrical power to the motor 302. This in turn will stop the motor 302 from driving the blades. Additionally, if a braking system is also used in the hedge trimmer, the braking system may also be applied, although this is unlikely to be necessary as the blades 312 should be stationary when it is in a jammed position under normal circumstances, although such a step may be applied so as to meet any safety or physical requirements of the power tool.

Once the first un-jamming procedure (406) is undertaken, the blades 312 of the hedge trimmer 10 should be stationary and any drive from the motor 302 should also have been terminated (408). At this stage, the controller's microprocessor will wait for a change in the user input (410) before activating the second un-jamming procedure is initiated so as to complete the un-jamming process.

At this stage of the operation process, the user would have been actuating the actuator 304, that is, the user would have been depressing a trigger or switch so as to operate the hedge trimmer 10. Once the trimmer stops, either due to a jam (404) and/or due to the operation of the first un-jamming procedure (406), the user is likely to maintain the actuation of the actuator as the jam is an unforeseeable event. However, it would be readily obvious to the user that the hedge trimmer 10 has stopped working and thus it would be intuitive for the user to release the trigger so as to retry the cutting operation, or to stop the hedge trimmer so that he or she can investigate the cause of the jam or the stop in operation.

Accordingly, the user may at this stage release the actuator 304. At this point, once the actuator 304 is released, the controller, which has completed the first un-jamming procedure (406), would be waiting for this event (408). In turn, the controller 306 would then start the second un-jamming procedure (410) whereby the controller 306 applies electrical power to the motor 302 so that the blades are reversed from their operational direction for a brief period of time. This may be performed by applying a reverse current to the motor 302, e.g. reversing the polarity of the power input in a D.C. arrangement, so that the motor 302 operates in the opposite direction, or alternatively, an adjustment may also be made to the transmission mechanism 314 to reverse the drive to the blades.

Preferably, this reversal of the blades is for a limited duration only and will depend on the tool itself, although in a preferred embodiment, the motor will drive the blades in an opposite direction from the operational direction for up to a maximum of 3 seconds, with a preferred duration of 0.5 seconds. This is so as to drive the blade away from the jam itself to free the blades from the jam. Preferably, by driving the blades in the opposite direction for a brief period of time, the only actions that are untaken by the second un-jamming procedure (410) is to free up the blade and not to continue to operate the hedge trimmer. This is advantageous in that a user is given an opportunity to inspect the jam or the condition of the hedge trimmer, before deciding on whether to make a second attempt, shift positions, or abandon the cutting action.

Once the blades are driven in the opposite direction for a brief period of time, the second un-jamming procedure (410) is complete, after which the blades should be unjammed and the hedge trimmer will return to its normal state so as to wait for further operation commands from the user (412). At this stage, the user can choose to operate the blade trimmer by actuating the actuator 304 at any time that would suit the user.

It should be understood that the above example embodiments are described with reference to a hedge trimmer. However, the un-jamming procedures may also operate with other reciprocating tools, including saws, hair trimmers, diggers, hammers or the like.

It will also be appreciated that where the methods and systems of the present invention are either wholly implemented by computing system or partly implemented by computing systems then any appropriate computing system architecture may be utilised. This will include stand alone computers, network computers and dedicated hardware devices. Where the terms "computing system" and "computing device" are used, these terms are intended to cover any appropriate arrangement of computer hardware capable of implementing the function described.

It will be appreciated by persons skilled in the art that numerous variations and/or modifications may be made to the invention as shown in the specific embodiments without departing from the scope of the invention as defined in the claims. The present embodiments are, therefore, to be considered in all respects as illustrative and not restrictive.

Any reference to prior art contained herein is not to be taken as an admission that the information is common general knowledge, unless otherwise indicated.

## Claims

1. A reciprocating tool (10) comprising:
a reciprocating arrangement (290) driven by an electric motor controlled by a controller (306) arranged to receive user input; wherein, the controller includes a jam sensing device (308) arranged to detect a jam in the reciprocating arrangement when the reciprocating arrangement is driven in a first direction, and when upon a jam is detected, arranged to activate a first un-jamming procedure, **characterised in that**, when upon a change in the user input is detected, the jam sensing device is arranged to activate a second un-jamming procedure arranged to drive the reciprocating arrangement in a second direction.

2. A reciprocating tool (10) in accordance with claim 1, wherein the first direction is an operating direction of the reciprocating arrangement.

3. A reciprocating tool (10) in accordance with claim 2, wherein the second direction is opposite to the first direction.

4. A reciprocating tool (10) in accordance with claim 1, wherein the controller (306) is arranged to receive the user input via an actuator (304) arranged to be manipulated by a user to instruct the controller to drive the reciprocating arrangement in the first direction.

5. A reciprocating tool (10) in accordance with claim 4, wherein the change in the user input is detected by the controller (306) when the user further manipulates the actuator (304) when the controller is driving the reciprocating arrangement (290) in the first direction.

6. A reciprocating tool (10) in accordance with claim 5, wherein the further manipulation of the actuator (304) includes releasing the actuator by the user.

7. A reciprocating tool (10) in accordance with any one of claims 1 to 6, wherein the jam is detected by detecting a current draw above a predetermined threshold from the electric motor.

8. A reciprocating tool (10) in accordance with any one of claims 1 to 7, wherein the jam sensing device (308) includes a hall effect sensor and/or an optical sensor to determine the position, speed, direction of movement, or any combination thereof of one or more operating component of the reciprocating tool to detect the jam.

9. A reciprocating tool (10) in accordance with any one of claims 1 to 8, wherein the first un-jamming procedure includes terminating the drive to the reciprocating arrangement.

10. A reciprocating tool (10) in accordance with any one of claims 1 to 9, wherein the second un-jamming procedure includes reversing the reciprocating arrangement (290).

11. A reciprocating tool (10) in accordance with claim 10, wherein the reversing of the reciprocating arrangement (290) is performed for a brief period so as to remove the reciprocating arrangement from the jam.

12. A reciprocating tool (10) in accordance with claim 11, wherein the reversing of the reciprocating arrangement (290) is performed for 3 seconds or less.

13. A reciprocating tool (10) in accordance with any one of claims 1 to 12, wherein the reciprocating arrangement (290) is a pair of reciprocating blades (202, 204).

14. A method of controlling a reciprocating tool (10) according to any of the preceding claims comprising the steps of:
- detecting a jam in the reciprocating arrangement (290) when the reciprocating arrangement is driven in a first direction; and when upon a jam is detected,
- activating a first un-jamming procedure, and when upon a change in a user input is detected;
- activate a second un-jamming procedure arranged to drive the reciprocating arrangement in a second direction opposite to the first direction.

15. A method for controlling a reciprocating tool (10) in accordance with claim 14, wherein the first unjamming procedure is arranged to terminate the drive of the reciprocating arrangement (290) in the first direction.

16. A method for controlling a reciprocating tool (10) in accordance with claim 14 or 15, wherein the change in the user input is a release of an actuator (304) arranged to be actuated by the user to operate the reciprocating tool.

## Patentansprüche

1. Pendelhubwerkzeug (10), das Folgendes umfasst:
eine Pendelhubanordnung (290), die durch einen Elektromotor angetrieben wird, der durch eine Steuerung (306) gesteuert wird, die dafür angeordnet ist, eine Benutzereingabe zu empfangen, wobei die Steuerung eine Blockierungserkennungseinrichtung (308) einschließt, die dafür angeordnet ist, eine Blockierung in der Pendelhubanordnung zu erkennen, wenn die Pendelhubanordnung in einer ersten Richtung angetrieben wird, und wenn eine Blockierung erkannt wird, dafür angeordnet ist, einen ersten Entblockierungsvorgang zu aktivieren, **dadurch gekennzeichnet, dass**, wenn eine Änderung bei der Benutzereingabe erkannt wird, die Blockierungserkennungseinrichtung dafür angeordnet ist, einen zweiten Entblockierungsvorgang zu aktivieren, der dafür angeordnet ist, die Pendelhubanordnung in einer zweiten Richtung anzutreiben.

2. Pendelhubwerkzeug (10) nach Anspruch 1, wobei die erste Richtung eine Arbeitsrichtung der Pendelhubanordnung ist.

3. Pendelhubwerkzeug (10) nach Anspruch 2, wobei die zweite Richtung entgegengesetzt zu der ersten Richtung ist.

4. Pendelhubwerkzeug (10) nach Anspruch 1, wobei die Steuerung (306) dafür angeordnet ist, die Benutzereingabe über ein Bedienteil (304) zu empfangen, das dafür angeordnet ist, durch einen Benutzer gehandhabt zu werden, um die Steuerung anzuweisen, die Pendelhubanordnung in der ersten Richtung anzutreiben.

5. Pendelhubwerkzeug (10) nach Anspruch 4, wobei die Änderung bei der Benutzereingabe durch die Steuerung (306) erkannt wird, wenn der Benutzer das Bedienteil (304) weiter handhabt, wenn die Steuerung die Pendelhubanordnung (290) in der ersten Richtung antreibt.

6. Pendelhubwerkzeug (10) nach Anspruch 5, wobei die weitere Handhabung des Bedienteils (304) ein Freigeben des Bedienteils durch den Benutzer einschließt.

7. Pendelhubwerkzeug (10) nach einem der Ansprüche 1 bis 6, wobei die Blockierung durch Erkennen einer Stromaufnahme oberhalb eines vorbestimmten Schwellenwertes von dem Elektromotor erkannt wird.

8. Pendelhubwerkzeug (10) nach einem der Ansprüche 1 bis 7, wobei die Blockierungserkennungseinrichtung (308) einen Hall-Effekt-Sensor und/oder einen optischen Sensor zum Bestimmen der Position, Geschwindigkeit, Bewegungsrichtung oder einer beliebigen Kombination derselben eines oder mehrerer Betriebsbestandteile der Pendelhubanordnung, um die Blockierung zu erkenne, einschließt.

9. Pendelhubwerkzeug (10) nach einem der Ansprüche 1 bis 8, wobei der erste Entblockierungsvorgang das Beenden des Antriebs für die Pendelhubanordnung einschließt.

10. Pendelhubwerkzeug (10) nach einem der Ansprüche 1 bis 9, wobei der zweite Entblockierungsvorgang das Umkehren der Pendelhubanordnung (290) einschließt.

11. Pendelhubwerkzeug (10) nach Anspruch 10, wobei das Umkehren der Pendelhubanordnung (290) für einen kurzen Zeitraum durchgeführt wird, um so die Pendelhubanordnung aus der Blockierung zu entfernen.

12. Pendelhubwerkzeug (10) nach Anspruch 11, wobei das Umkehren der Pendelhubanordnung (290) für 3 Sekunden oder weniger durchgeführt wird.

13. Pendelhubwerkzeug (10) nach einem der Ansprüche 1 bis 12, wobei die Pendelhubanordnung (290) ein Paar von Pendelhubklingen (202, 204) ist.

14. Verfahren zum Steuern eines Pendelhubwerkzeugs (10) nach einem der vorhergehenden Ansprüche, das die folgenden Schritte umfasst:
- Erkennen einer Blockierung in der Pendelhubanordnung (290), wenn die Pendelhubanordnung in einer ersten Richtung angetrieben wird, und wenn eine Blockierung erkannt wird,
- Aktivieren eines ersten Entblockierungsvorgangs, und wenn eine Änderung bei einer Benutzereingabe erkannt wird,
- Aktivieren eines zweiten Entblockierungsvorgangs, der dafür angeordnet ist, die Pendelhubanordnung in einer zweiten Richtung, entgegengesetzt zu der ersten Richtung, anzutreiben.

15. Verfahren zum Steuern eines Pendelhubwerkzeugs (10) nach Anspruch 14, wobei der erste Entblockierungsvorgang dafür angeordnet ist, den Antrieb der Pendelhubanordnung (290) in der ersten Richtung zu beenden.

16. Verfahren zum Steuern eines Pendelhubwerkzeugs (10) nach Anspruch 14 oder 15, wobei die Änderung bei der Benutzereingabe eine Freigabe eines Bedienteils (304) ist, das dafür angeordnet ist, durch den Benutzer gehandhabt zu werden, um die Pendelhubanordnung zu bedienen.

## Revendications

1. Outil à mouvement alternatif (10), comprenant :
un dispositif à mouvement alternatif (290) entraîné par un moteur électrique contrôlé par un moyen de commande (306) configuré pour recevoir une entrée d'un utilisateur ; dans lequel le moyen de commande inclut un dispositif de détection d'un blocage (308) configuré pour détecter un blocage dans le dispositif à mouvement alternatif lorsque le dispositif à mouvement alternatif est entraîné dans une première direction, et lors de la détection d'un blocage, est configuré pour activer une première procédure de déblocage, **caractérisé en ce que**, lors de la détection d'un changement dans l'entrée de l'utilisateur, le dispositif de détection d'un blocage est configuré pour activer une deuxième procédure de déblocage pour entraîner le dispositif à mouvement alternatif dans une deuxième direction.

2. Outil à mouvement alternatif (10) selon la revendication 1, dans lequel la première direction est une direction de fonctionnement du dispositif à mouvement alternatif.

3. Outil à mouvement alternatif (10) selon la revendication 2, dans lequel la deuxième direction est opposée à la première direction.

4. Outil à mouvement alternatif (10) selon la revendication 1, dans lequel le moyen de commande (306) est configuré pour recevoir l'entrée de l'utilisateur par l'intermédiaire d'un actionneur (304) configuré pour être manipulé par un utilisateur pour instruire le moyen de commande à entraîner le dispositif à mouvement alternatif dans la première direction.

5. Outil à mouvement alternatif (10) selon la revendication 4, dans lequel le changement de l'entrée de l'utilisateur est détecté par le moyen de commande (306) lorsque l'utilisateur continue à manipuler l'actionneur (304) lorsque le moyen de commande entraîne le dispositif à mouvement alternatif (290) dans la première direction.

6. Outil à mouvement alternatif (10) selon la revendication 5, dans lequel la manipulation additionnelle de l'actionneur (306) inclut la libération de l'actionneur par l'utilisateur.

7. Outil à mouvement alternatif (10) selon l'une quelconque des revendications 1 à 6, dans lequel le blocage est détecté en détectant une consommation de courant supérieure à un seuil prédéterminé par le moteur électrique.

8. Outil à mouvement alternatif (10) selon l'une quelconque des revendications 1 à 7, dans lequel le dispositif de détection d'un blocage (308) inclut un capteur à effet Hall et/ou un capteur optique pour déterminer la position, la vitesse, la direction de déplacement, ou une quelconque combinaison de ces éléments d'un ou de plusieurs composants opérationnels de l'outil à mouvement alternatif pour détecter le blocage.

9. Outil à mouvement alternatif (10) selon l'une quelconque des revendications 1 à 8, dans lequel la première procédure de déblocage inclut l'arrêt de l'entraînement du dispositif à mouvement alternatif.

10. Outil à mouvement alternatif (10) selon l'une quelconque des revendications 1 à 9, dans lequel la deuxième procédure de déblocage inclut l'inversion du dispositif à mouvement alternatif (290).

11. Outil à mouvement alternatif (10) selon la revendication 10, dans lequel l'inversion du dispositif à mouvement alternatif (290) est exécutée pendant une brève période en vue d'éliminer le blocage du dispositif à mouvement alternatif.

12. Outil à mouvement alternatif (10) selon la revendication 11, dans lequel l'inversion du dispositif à mouvement alternatif (290) est exécutée pendant 3 secondes ou moins.

13. Outil à mouvement alternatif (10) selon l'une quelconque des revendications 1 à 12, dans lequel le dispositif à mouvement alternatif (290) est constitué par une paire de lames à mouvement alternatif (202, 204).

14. Procédé de commande d'un outil à mouvement alternatif (10) selon l'une quelconque des revendications précédentes, comprenant les étapes ci-dessous :
détection d'un blocage dans le dispositif à mouvement alternatif (290) lorsque le dispositif à mouvement alternatif est entraîné dans une première direction ; et lors de la détection d'un blocage :
activation d'une première procédure de déblocage, et lors de la détection d'un changement dans l'entrée de l'utilisateur :
activation d'une deuxième procédure de déblocage configurée pour entraîner le dispositif à mouvement alternatif dans une deuxième direction opposée à la première direction.

15. Procédé de commande d'un outil à mouvement alternatif (10) selon la revendication 14, dans lequel la première procédure de déblocage est configurée pour arrêter l'entraînement du dispositif à mouvement alternatif (290) dans la première direction.

16. Procédé de commande d'un outil à mouvement alternatif (10) selon les revendications 14 ou 15, dans lequel le changement de l'entrée de l'utilisateur est constitué par une libération d'un actionneur (304) configuré pour être actionné par l'utilisateur pour faire fonctionner l'outil à mouvement alternatif.
